# EUROPEAN PATENT APPLICATION

(11) **EP 3 992 691 A1**
(43) Date of publication of application: **04.05.2022**
(21) Application number: 20779710.1
(22) Date of filing: 13.03.2020
(51) Int. Cl.: G02B 27/01, B60K 35/00, G02B 30/30, G02F 1/13, H04N 13/225

(54) **STEREOSCOPIC VIRTUAL IMAGE DISPLAY MODULE, STEREOSCOPIC VIRTUAL IMAGE DISPLAY SYSTEM, AND MOBILE OBJECT**

(30) Priority: 26.03.2019 JP 2019057798
(71) Applicant: Kyocera Corporation, Kyoto-shi, Kyoto 612-8501 (JP)
(72) Inventor: KUSAFUKA, Kaoru, Kyoto-shi, Kyoto 612-8501 (JP)
(74) Representative: Viering, Jentschura & Partner mbB Patent- und Rechtsanwälte
(86) International application number: PCT/JP2020/011201
(87) International publication number: WO 2020/195975

(57) **Abstract**

A stereoscopic virtual image display module (11) switchable between 3D image display and 2D image display includes a display panel (14), a first optical device set (19), and a second optical device (15). The display panel (14) includes an active area that outputs image light. The first optical device set (19) reflects the image light toward a user to allow the user to view a virtual image corresponding to the active area. The second optical device (15) is configured to change or restrict a ray direction of the image light traveling from a first active area included in the active area through the first optical device set (19) toward the user. The second optical device (15) allows first image light to enter a left eye (El) and allows second image light to enter a right eye (Er). The stereoscopic virtual image display module (11) allows each eye of the user to view a virtual image corresponding to the first active area at a first pixel density higher than or equal to 60 pixels per degree.

## Description

### FIELD

The present disclosure relates to a stereoscopic virtual image display module, a stereoscopic virtual image display system, and a movable object.

### BACKGROUND

A known display device includes a liquid crystal panel, a parallax barrier located in front of or behind the liquid crystal panel, and an optical system for forming an enlarged virtual image to display an enlarged three-dimensional (3D) image. For example, the parallax barrier described in Patent Literature 1 separates a parallax image displayed on a liquid crystal panel into a left-eye image and a right-eye image to allow a user to view an enlarged virtual image stereoscopically.

The different images in the parallax image displayed on the liquid crystal panel may have a lower resolution.

### CITATION LIST

### PATENT LITERATURE

Patent Literature 1: Japanese Unexamined Patent Application Publication No. 7-287193

### BRIEF SUMMARY

A stereoscopic virtual image display module according to one embodiment of the present disclosure includes a display panel, a first optical device set, and a second optical device. The display panel includes an active area. The active area is configured to output image light. The first optical device set reflects the image light toward a first eye and a second eye of a user. The first optical device set reflects the image light to allow the user to view a virtual image corresponding to the active area. The second optical device is configured to change or restrict a ray direction of the image light traveling from a first active area through the first optical device set toward the user. The second optical device allows first image light to enter the first eye and allows second image light to enter the second eye. The first active area is included in the active area. The stereoscopic virtual image display module allows each of the first eye and the second eye to view a virtual image corresponding to the first active area at a first pixel density higher than or equal to 60 pixels per degree.

A stereoscopic virtual image display module according to one embodiment of the present disclosure includes a display panel, a first optical device set, and a second optical device. The display panel includes an active area. The active area is configured to output image light. The first optical device set reflects the image light in a first direction. The second optical device is configured to change or restrict a ray direction of the image light traveling from a first active area. The second optical device allows first image light to enter a first space and allows second image light to enter a second space. The stereoscopic virtual image display module, in combination with a windshield, is controllable to allow each eye of a user to view a virtual image corresponding to the first active area at a pixel density higher than or equal to 60 pixels per degree. The windshield reflects the image light toward the user.

A stereoscopic virtual image display module according to one embodiment of the present disclosure includes a display panel, a first optical device set, and a second optical device. The display panel includes an active area. The active area is configured to output image light. The first optical device set reflects the image light toward a first eye and a second eye of a user. The first optical device set reflects the image light to allow the user to view a virtual image from the active area. The second optical device is configured to attenuate or restrict the image light traveling from a first active area through the first optical device set toward the user. The second optical device is controllable to allow first image light to enter the first eye and to allow second image light to enter the second eye. The first active area is included in the active area. The stereoscopic virtual image display module allows each of the first eye and the second eye to view a virtual image corresponding to the first active area at a first pixel density higher than or equal to 60 pixels per degree.

A stereoscopic virtual image display module according to one embodiment of the present disclosure includes a display panel, a first optical device set, and a second optical device. The display panel includes an active area. The active area is configured to output image light. The first optical device set reflects the image light in a first direction. The second optical device changes or restricts a ray direction of the image light traveling from a first active area. The first optical device set is controllable to allow first image light to enter a first space and to allow second image light to enter a second space. The stereoscopic virtual image display module, in combination with a windshield, is controllable to allow each eye of a user to view a virtual image corresponding to the first active area at a first pixel density higher than or equal to 60 pixels per degree. The windshield reflects the image light toward the user.

A stereoscopic virtual image display system according to one embodiment of the present disclosure includes the stereoscopic virtual image display module according to any one of the above embodiments, and a windshield.

A movable object according to one embodiment of the present disclosure includes the stereoscopic virtual image display module according to any one of the above embodiments, and a windshield.

### BRIEF DESCRIPTION OF DRAWINGS

The objects, features, and advantages of the present invention will become more apparent from the following detailed description and the drawings.
FIG. 1 is a schematic diagram of a stereoscopic virtual image display module according to one embodiment.
FIG. 2 is an enlarged perspective view of a display panel and a second optical device.
FIG. 3 is a diagram describing an example arrangement of first subpixels included in the display panel.
FIG. 4 is a diagram describing example display of the second subpixels included in the second optical device in a first display mode.
FIG. 5 is a diagram describing three-dimensional image display in a second display mode.
FIG. 6 is a diagram describing example display of the second subpixels included in the second optical device in the second display mode.
FIG. 7 is a diagram describing an example arrangement of third subpixels and fourth subpixels included in the display panel in the second display mode.
FIG. 8 is a diagram describing a shifted arrangement of the third subpixels and the fourth subpixels based on the positions of a user's eyes.
FIG. 9 is a diagram describing a shifted arrangement of attenuation areas and transmissive areas on the second optical device based on the positions of the user's eyes.
FIG. 10 is a diagram describing a first example display method used in the display device.
FIG. 11 is a diagram describing a second example display method used in the display device.
FIG. 12 is a diagram describing a third example display method used in the display device.
FIG. 13 is a diagram showing examples of an image display area and a non-image display area.
FIG. 14 is a diagram showing examples of a seventh area and an eighth area corresponding to the areas in FIG. 13.
FIG. 15 is a diagram describing the location and the structure of the display device installed in a movable object.

### DETAILED DESCRIPTION

One or more embodiments of the present disclosure will now be described with reference to the drawings. The drawings referred to hereafter are schematic and are not drawn to scale relative to the actual size of each component.

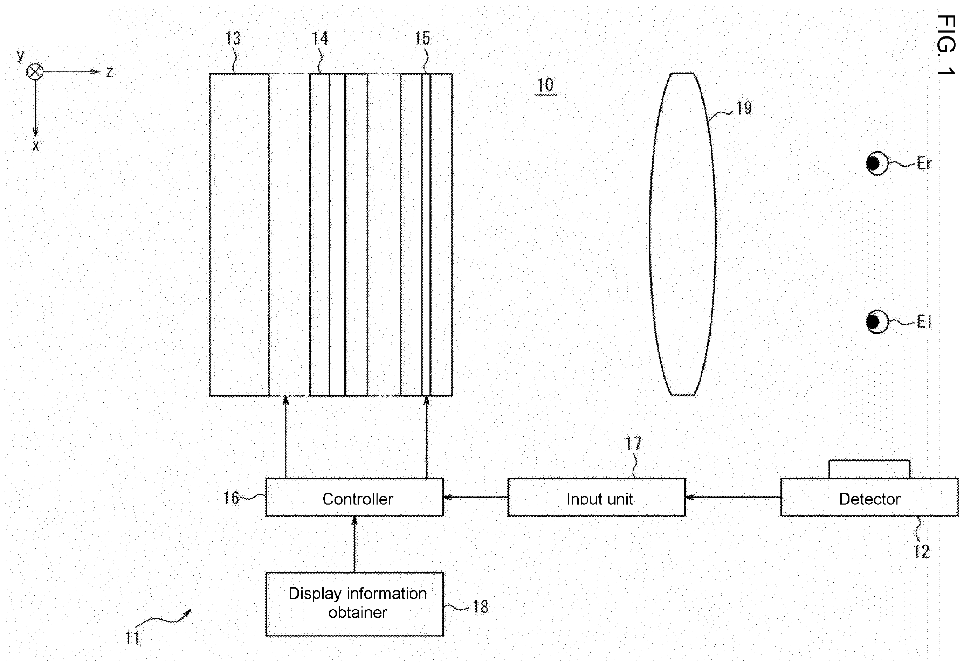

A stereoscopic virtual image display system 10 according to one embodiment of the present disclosure includes a stereoscopic virtual image display module 11 and a detector 12 as shown in FIG. 1. In FIG. 1, the stereoscopic virtual image display system 10 is viewed from above a user who watches an image through the stereoscopic virtual image display system 10. The detector 12 may detect the positions of the user's left and right eyes El and Er. The detector 12 may output positional information about the user's left and right eyes El and Er to the stereoscopic virtual image display module 11. The stereoscopic virtual image display module 11 may display an image in accordance with the positional information about the user's left and right eyes El and Er. The structure of each component of the stereoscopic virtual image display system 10 will now be described in more detail. Stereoscopic Virtual Image Display Module

The stereoscopic virtual image display system 10 according to one embodiment of the present disclosure allows the user to view a stereoscopic virtual image. The stereoscopic virtual image is a virtual image perceived by the user as a stereoscopic image. The user may view planar virtual images having a parallax difference with the different eyes to perceive the virtual images as a stereoscopic image.

The stereoscopic virtual image display module 11 includes a display panel 14, at least a portion of a first optical device set 19, and a second optical device 15. The stereoscopic virtual image display system 10 may include another portion of the first optical device set 19 not included in the stereoscopic virtual image display module 11. The stereoscopic virtual image display module 11 may include an illuminator 13, a controller 16, an input unit 17, and a display information obtainer 18.

The display panel 14 may be a transmissive or self-luminous display panel. For the display panel 14 being a transmissive display panel, the stereoscopic virtual image display module 11 may include the illuminator 13. For the display panel 14 being a self-luminous display panel, the stereoscopic virtual image display module 11 may eliminate the illuminator 13.

The transmissive display panel may include a liquid crystal panel. The display panel 14 may have the structure of a known liquid crystal panel. The known liquid crystal panel herein may be an in-plane switching (IPS) panel, a fringe field switching (FFS) panel, a vertical alignment (VA) panel, an electrically controlled birefringence (ECB) panel, or any of various other liquid crystal panels. The transmissive display panel may be a microelectromechanical systems (MEMS) shutter display panel, in addition to a liquid crystal panel. A self-luminous display panel may be an organic electroluminescence (EL) display panel or an inorganic EL display panel.

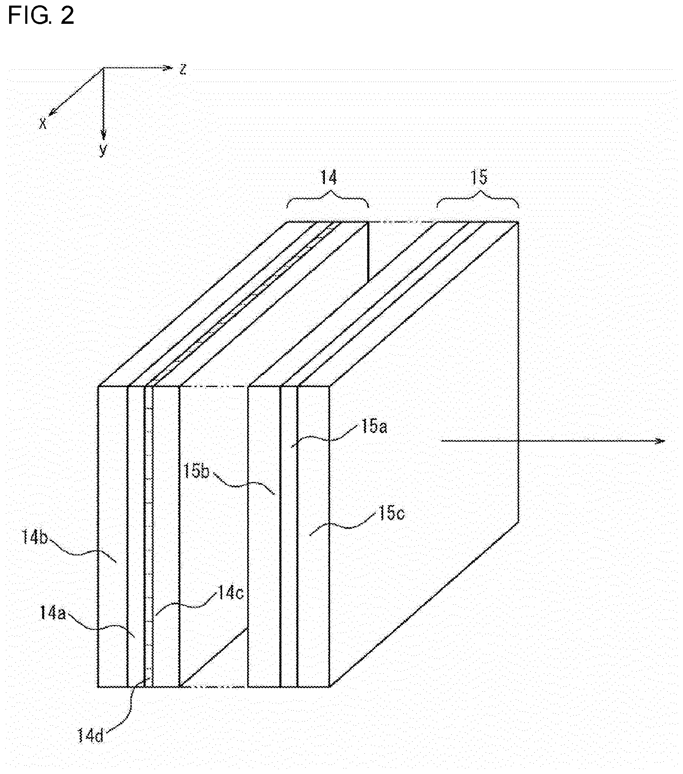

FIG. 2 is an enlarged view of the display panel 14 and the second optical device 15. The display panel 14 may include a liquid crystal layer 14a, two glass substrates 14b and 14c separated by the liquid crystal layer 14a, and a color filter 14d located between the liquid crystal layer 14a and the glass substrate 14c. The display panel 14 may further include alignment films, transparent electrodes, and polarizer plates. The arrangement and the structures of the alignment films, the transparent electrodes, and the polarizer plates are known as those for typical liquid crystal panels, and will not be described. The display panel 14 may eliminate the color filter 14d. The stereoscopic virtual image display module 11 may be a monochrome display device.

The display panel 14 displays an image. The display area on the display panel 14 to display an image is expected to be located at or near the interface between the liquid crystal layer 14a and the color filter 14d. The display area on the display panel 14 to display an image may be referred to as an active area. In other words, the display panel 14 includes the active area, which may be referred to as an active area on the stereoscopic virtual image display module 11. The active area refers to an area on which an image can actually appear on the display panel 14. The active area can output image light.

In one embodiment, the illuminator 13, the display panel 14, the second optical device 15, and the first optical device set 19 are arranged along the optical path of image light representing an image output toward the user. The stereoscopic virtual image display module 11 may include the illuminator 13, the display panel 14, the second optical device 15, and the first optical device set 19 arranged in decreasing order of distance from the user. The display panel 14 and the second optical device 15 may switch positions.

The illuminator 13 may include a light source, a light guide plate, a diffuser plate, and a diffuser sheet. The illuminator 13 illuminates the display panel 14 with planar illumination light. The illuminator 13 emits illumination light from the light source. The illuminator 13 may spread the illumination light uniformly for illuminating the surface of the display panel 14 using its components including the light guide plate, the diffuser plate, and the diffuser sheet. The illuminator 13 may emit the uniform light toward the display panel 14. The transmissive display panel 14 transmits the illumination light. The transmitted light is image light corresponding to the image displayed on the display panel 14. The transmissive display panel 14 converts the illumination light to the image light.

The first optical device set 19 reflects the image light toward a first eye and a second eye of the user. The first optical device set 19 projects an image displayed on the active area on the display panel 14 into the user's field of view. The first optical device set 19 reflects the image light toward the user to allow the user to view the virtual image corresponding to the active area. The first optical device set 19 may include a reflective optical element, a refractive optical element with a positive refractive power, or both.

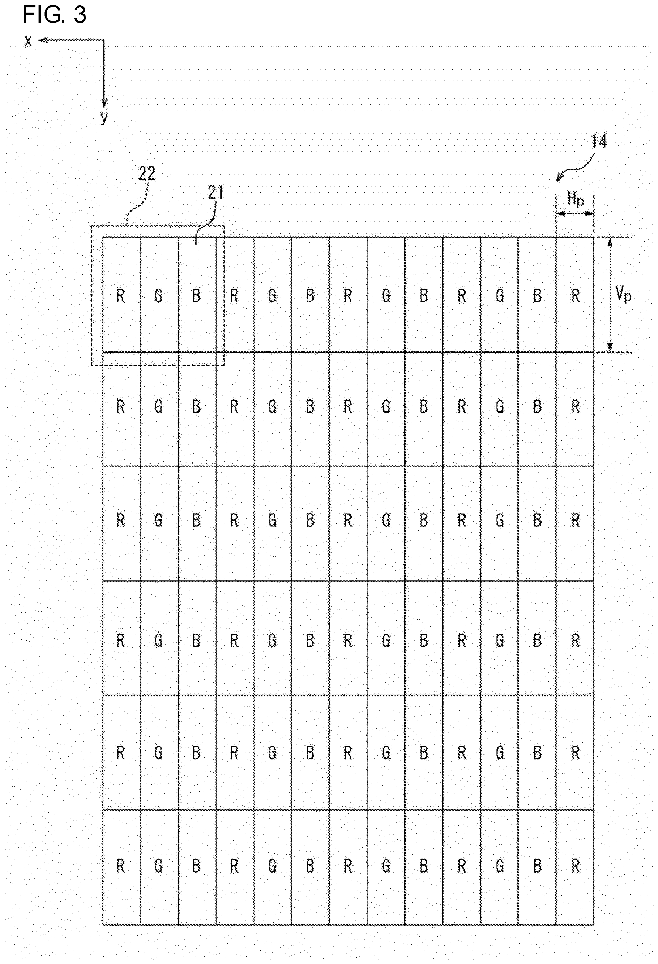

FIG. 3 is an enlarged partial view of the display panel 14 as viewed from the second optical device 15. The display panel 14 includes multiple first subpixels 21 on the display area. The multiple first subpixels 21 are arranged in a first direction and a second direction intersecting with the first direction. The second direction may be substantially perpendicular to the first direction. The first direction corresponds to a parallax direction for causing parallax between the two eyes of the user. The first direction may be a lateral or right-left direction in the virtual image viewed by the user. The second direction may be a vertical or up-down direction in the virtual image viewed by the user. The first direction will be referred to as x-direction. The second direction will be referred to as y-direction. In the figures, x-direction is leftward and y-direction is downward as viewed in the direction from the second optical device 15 to the illuminator 13. The direction perpendicular to x-direction and y-direction and along the optical path toward the user's eyes will be referred to as z-direction.

The first subpixels 21 may be arranged in a grid in x-direction and y-direction. In one embodiment, each first subpixel 21 is longer in y-direction than in x-direction. Each first subpixel 21 may be colored red (R), green (G), or blue (B) in correspondence with the color arrangement of the color filter 14d. A set of three first subpixels 21 colored R, G, and B may form one pixel 22. In FIG. 3, the dotted line indicates one pixel 22 for ease of explanation. Each pixel may have a length ratio of, but is not limited to, 1: 1 in x-direction and y-direction. For example, multiple first subpixels 21 forming individual pixels 22 may be arranged in x-direction. First subpixels 21 having the same color may be arranged in y-direction. Multiple first subpixels 21 may have the same color or may be colorless. The first subpixels 21 change the balance of color components of the illumination light to produce image light. For example, first subpixels 21 in R attenuate light in the other colors to transmit red light. For the display panel 14 being a self-luminous display panel, the first subpixels 21 output image light.

The second optical device 15 may change or restrict the ray direction of the image light traveling from a first active area through the first optical device set 19 toward the user. The first active area is included in the active area. The second optical device 15 may attenuate or restrict the image light traveling from the first active area through the first optical device set 19 toward the user. The second optical device 15 allows first image light to enter a first space and second image light to enter a second space. The first space is a space expected to include the first eye. The second space is a space expected to include the second eye. The second optical device 15 allows first image light to enter the first eye and second image light to enter the second eye. The first image light and the second image light are included in the image light output from the first active area. The user receives the first image light with the first eye to view the virtual image. The user receives the second image light with the second eye to view the virtual image. The user views the first image light and the second image light with the different eyes to perceive the two virtual images as one stereoscopic image.

The second optical device 15 may be a transmissive display panel. The second optical device 15 receives the output from the display panel 14. The second optical device 15 may be a liquid crystal panel. The second optical device 15 being a liquid crystal panel controls the attenuation of image light. As shown in FIG. 2, the second optical device 15 includes a liquid crystal layer 15a and two glass substrates 15b and 15c separated by the liquid crystal layer 15a. The second optical device 15 may eliminate a color filter. The second optical device 15 without a color filter is less likely to decrease the luminance of image light. The display area on the second optical device 15 is expected to be located at or near the interface between the liquid crystal layer 15a and the glass substrate 15c.

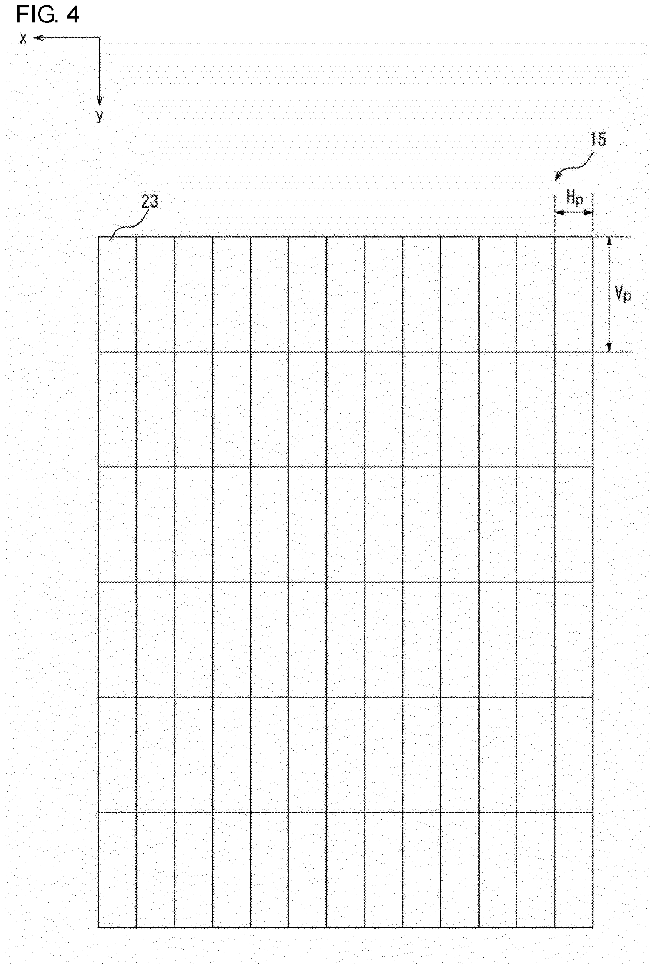

As shown in FIG. 4, the second optical device 15 includes multiple second subpixels 23 arranged in a grid in x-direction and y-direction. The second subpixels 23 may be arranged with the same pitch as the first subpixels 21. In this case, the horizontal pitch Hp and the vertical pitch Vp of the second subpixels 23 are the same as the horizontal pitch Hp and the vertical pitch Vp of the first subpixels 21. The display panel 14 and the second optical device 15 may be arranged to face each other to have the first subpixels 21 each overlapping one of the second subpixels 23 as viewed in a direction normal to the display panel 14. The display panel 14 and the second optical device 15 can thus be produced easily by using display panels with the same shape and the same dimensions. In the stereoscopic virtual image display module 11, the first subpixels 21 in the display panel 14 correspond one-to-one to the second subpixels 23 in the second optical device 15. The stereoscopic virtual image display module 11 reduces the computation for displaying an image and allows easy control by the controller 16. However, the second subpixels 23 may have a pitch different from the pitch of the first subpixels 21. For example, the second subpixels 23 may be sized differently from the first subpixels 21 to reflect different image magnifications used by the first optical device set 19 for the display panel 14 and the second optical device 15.

The second optical device 15 is spaced from the display panel 14 by a predetermined distance in z-direction. The display panel 14 and the second optical device 15 may be integral with each other. For example, the display panel 14 and the second optical device 15 may be fixed together using an optically transparent adhesive. The optically transparent adhesive includes an optical clear adhesive (OCA).

The second optical device 15 controls the transmittance of image light for each second subpixel 23. The second optical device 15 controls the attenuation of image light for each second subpixel 23. The second optical device 15 may transmit the image light passing through a specified area without greatly reducing the light intensity, while attenuating the image light passing through another specified area. Attenuating the image light herein includes transmitting substantially no light, or blocking the light. The second optical device 15 may have the lightest tone in the second subpixels 23 in the area transmitting light, and the darkest tone in the second subpixels 23 in the area attenuating the light. The tone of each second subpixel 23 corresponds to light transmittance. The lightest tone corresponds to the highest light transmittance. The darkest tone corresponds to the lowest light transmittance. The second optical device 15 can set visible-light transmittance varying 100 times or more, for example, about 1,000 times, between the transmissive area for transmitting light and the attenuation area for attenuating light.

The second optical device 15 may be a MEMS shutter panel. The second optical device 15 being a MEMS shutter panel restricts image light. The second optical device 15 may have multiple apertures arranged in the first and second directions. The apertures may correspond to subpixels or pixels. The second optical device 15 may include color filters at the apertures.

The second optical device 15 may be a parallax barrier. The parallax barrier restricts the ray direction of image light. The parallax barrier includes an area that transmits image light and an area that restricts the transmission of image light. The second optical device 15 may be a parallax lens. The parallax lens changes the ray direction of image light.

The controller 16 is connectable to the components of the stereoscopic virtual image display system 10 to control these components. The controller 16 may be, for example, a processor. The controller 16 may include one or more processors. The processors may include a general-purpose processor that reads a specific program to perform a specific function and a processor dedicated to specific processing. The dedicated processor may include an application-specific integrated circuit (ASIC). The processor may include a programmable logic device (PLD). The PLD may include a field-programmable gate array (FPGA). The controller 16 may either be a system on a chip (SoC) or a system in a package (SiP) in which one or more processors cooperate with other components. The controller 16 may include a storage unit for storing various information sets or a program for causing each component of the stereoscopic virtual image display system 10 to operate. The storage may be, for example, a semiconductor memory. The storage unit may serve as a work memory for the controller 16.

The controller 16 controls the first subpixels 21 in the display panel 14 based on image data. The display panel 14 has the first subpixels 21 controllable by the controller 16. The controller 16 controls the second subpixels 23 in the second optical device 15. The second optical device 15 may have the second subpixels 23 controllable by the controller 16. The image data may be obtained from the display information obtainer 18 described later. The controller 16 may internally generate the image data based on information obtained from the display information obtainer 18. The image data may include, for example, characters and symbols. The image data includes two-dimensional (2D) image data and parallax image data for displaying a three-dimensional (3D) image.

The controller 16 performs switching between multiple display modes including a first display mode for displaying a 2D image and a second display mode for displaying a parallax image on the display panel 14. The controller 16 may perform switching between multiple drive modes including a first drive mode corresponding to the first display mode and a second drive mode corresponding to the second display mode on the second optical device 15. The display mode switching performed by the controller 16 will be described later.

The input unit 17 may receive positional information about the user's left and right eyes El and Er from the detector 12. The input unit 17 may include an electric connector or an optical connector to receive an electric signal or an optical signal from the detector 12.

The display information obtainer 18 obtains information to be displayed by the stereoscopic virtual image display module 11 from another device. For example, the display information obtainer 18 may obtain information to be displayed from an image playback device for playing a prestored image. The display information obtainer 18 may obtain information to be displayed through an external wireless communication line. For the stereoscopic virtual image display system 10 to be installed in a vehicle, for example, the display information obtainer 18 may obtain information to be displayed from an in-vehicle electronic control unit (ECU).

The controller 16 controls the display panel 14 and the second optical device 15 based on the image magnifications used by the first optical device set 19 for the display panel 14 and the second optical device 15 relative to the positions of the user's left and right eyes El and Er.

In one embodiment, the first optical device set 19 projects image light to allow the first subpixels 21 and the second subpixels 23 facing the first subpixels 21 to have different pitches within the field of view of the user who views the image from an optimum viewing distance. In this case, although the display panel 14 is farther than the second optical device 15 from the user, the display area on the display panel 14 having the subpixels 21 and the display area on the second optical device 15 having the subpixels 23 arranged in the same manner as the subpixels 21 constitute the same view range. The first optical device set 19 satisfying such conditions may be designed based on geometrical optics.

This first optical device set 19 facilitates determination of the correspondence between the first subpixels 21 and the second subpixels 23. Thus, the controller 16 can be simplified to reduce the processing load.

### Detector

The detector 12 detects the positions of the user's eyes and outputs the information to the input unit 17 in the stereoscopic virtual image display module 11. The detector 12 may include, for example, a camera. The detector 12 may capture an image of the face of the user with the camera. The detector 12 may detect the position of at least one of the left and right eyes El and Er from the image captured with the camera. The detector 12 may detect, from the image captured with one camera, the position of at least one of the left and right eyes El and Er as the coordinates in a 3D space. The detector 12 may detect, from the images captured with two or more cameras, the position of at least one of the left and right eyes El and Er as the coordinates in a 3D space.

The detector 12 may include no camera and may be connected to an external camera. The detector 12 may include an input terminal for receiving signals from the external camera. The external camera may be connected to the input terminal directly. The external camera may be connected to the input terminal indirectly through a shared network. The detector 12 including no camera may include the input terminal for receiving image signals from the camera. The detector 12 including no camera may detect the position of at least one of the left and right eyes El and Er from the image signal input into the input terminal.

The detector 12 may include a sensor in place of a camera. The sensor may be an ultrasonic sensor or an optical sensor. The detector 12 may detect the position of the head of the user with the sensor, and estimate the position of at least one of the left and right eyes El and Er based on the position of the head. The detector 12 may detect, with one sensor or two or more sensors, the position of at least one of the left and right eyes El and Er as the coordinates in a 3D space.

When detecting the position of one of the left and right eyes El and Er, the detector 12 may estimate the position of the other eye from prestored user's inter-eye distance information or prestored typical inter-eye distance information. The position of the other eye may be estimated by the controller 16 rather than by the detector 12.

For a display device including the stereoscopic virtual image display module 11 substantially fixed in position relative to the user's left and right eyes El and Er, the detector 12 may be eliminated. In this case, the input unit 17 is also eliminated.

### First Display Mode

In the first display mode, the stereoscopic virtual image display module 11 displays a 2D image on the first subpixels 21 in the display panel 14. The 2D image may include a monochrome image and a color image. In the first display mode, the second optical device 15 is operated in the first drive mode by the controller 16. The second optical device 15 may be controlled to reduce the attenuation of image light from the display panel 14 or may be controlled not to block the image light. The user views the virtual image corresponding to the first subpixels 21 with the two eyes. The stereoscopic virtual image display module 11 according to one or more embodiments of the present disclosure allows the user to view the virtual image corresponding to the first subpixels 21 at a pixel density higher than or equal to 160 pixels per degree. The number of pixels per degree may be expressed in pixels per degree (PPD). The number of pixels per unit angle is referred to as an angular pixel density. The user views the virtual image at 60 PPD with the two eyes. The pixel density of the virtual image viewed with the two eyes may be referred to as a first pixel density. The pixel density is determined by, for example, the distance to the virtual image, the pixels per inch (PPI) of the display panel 14, and the magnification of the first optical device set 19.

In the first drive mode, the second optical device 15 may set, for all the second subpixels 23, the lightest tone or a tone substantially equivalent to the lightest tone. In this case, the lightest tone of each second subpixel 23 indicates a tone with the highest transmittance of image light from the display panel 14. The darkest tone of each second subpixel 23 described below indicates a tone with the lowest transmittance of image light from the display panel 14. In FIG. 4, all the second subpixels 23 have the lightest tone. The second subpixels 23 transmit the image light from the image displayed on the display panel 14.

The second subpixels 23 may be operated in the first display mode with a driving method different from the method described above. For example, the second subpixels 23 may have the lightest tone in an area corresponding to an area on the display panel 14 displaying an image, and the darkest tone in an area corresponding to an area on the display panel 14 displaying no image.

### Second Display Mode

In the second display mode, an image is displayed as a 3D image viewable by the user. To properly display a 3D image, the distance from the display panel 14 to the user's left and right eyes El and Er is set to, for example, an optimum viewing distance, which causes minimum crosstalk for a parallax image viewed through the stereoscopic virtual image display module 11. In this case, crosstalk refers to a phenomenon in which an image for the right eye Er is viewed by the left eye El and/or an image for the left eye El is viewed by the right eye Er.

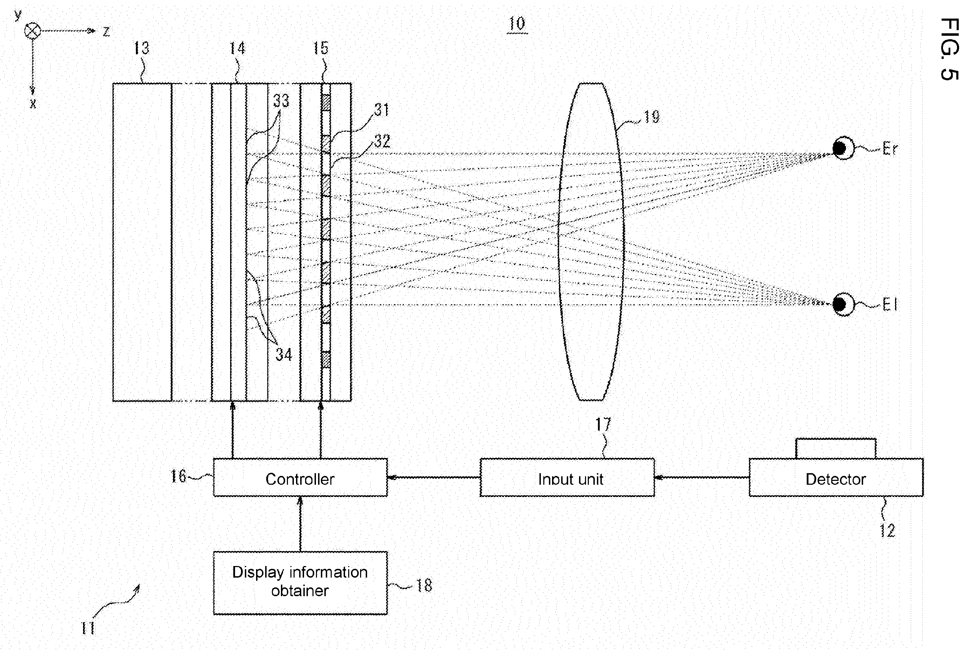

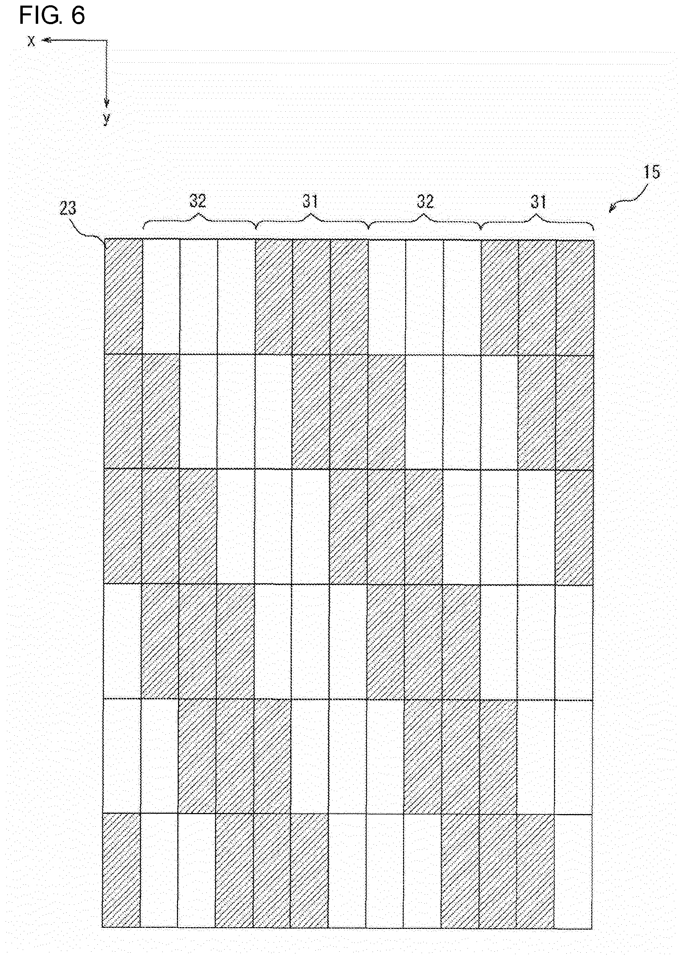

In the second display mode for displaying a 3D image, the second optical device 15 is operated in the second drive mode by the controller 16. In the second drive mode, the second optical device 15 functions as an optical element that attenuates the image light from the first subpixels 21. As shown in FIGs. 5 and 6, the second subpixels 23 included in attenuation areas (first areas) 31 on the second optical device 15 are controlled by the controller 16 to have a darker tone than the second subpixels 23 included in transmissive areas (second areas) 32. The second subpixels 23 included in the attenuation areas 31 on the second optical device 15 may be set to have the darkest tone. The second subpixels 23 included in the transmissive areas 32 are set to have a light tone by the controller 16. The second subpixels 23 included in the transmissive areas 32 may be set to have the lightest tone. The second subpixels 23 included in the attenuation areas 31 may have a light transmittance of one hundredth or less than the light transmittance of the second subpixels 23 included in the transmissive areas 32.

As shown in FIG. 6, the attenuation areas 31 and the transmissive areas 32 each extend in one direction. The attenuation areas 31 and the transmissive areas 32 may be arranged alternately. The attenuation areas 31 each may have substantially the same width and may be arranged periodically at predetermined intervals in x-direction. The transmissive areas 32 each may have substantially the same width and may be arranged periodically at predetermined intervals in x-direction. The attenuation areas 31 and the transmissive areas 32 on the second optical device 15 define the viewable range of the image light from the first subpixels 21 included in the display panel 14 for each of the left and right eyes El and Er. Each attenuation area 31 may have the same width as or a greater width than each transmissive area 32 in x-direction.

The attenuation areas 31 and the transmissive areas 32 may continuously extend in one direction except x-direction. The attenuation areas 31 and the transmissive areas 32 may function as a parallax barrier. The direction in which the attenuation areas 31 and the transmissive areas 32 extend may be oblique to x-direction and y-direction. The direction in which the attenuation areas 31 and the transmissive areas 32 extend may have an angle with respect to y-direction that may be referred to as a barrier inclination angle. The barrier inclination angle may be greater than 0 degrees and less than 90 degrees. For another structure with the attenuation areas 31 and the transmissive areas 32 arranged in y-direction, the displayed image is likely to contain recognizable moire due to errors in the dimensions and/or in the arrangement of the first subpixels 21 and/or the second subpixels 23. For the attenuation areas 31 and the transmissive areas 32 with a barrier inclination angle other than 0 degrees, the displayed image is less likely to contain recognizable moire although having errors in the dimensions and/or the arrangement of the first subpixels 21 and/or in the second subpixels 23.

In the second display mode, the second optical device 15 attenuates at least a portion of image light from the display panel 14 depending on the position through which the image light enters the second optical device 15. The second optical device 15 transmits another portion of image light from the display panel 14 depending on the position through which the image light enters the second optical device 15. The second optical device 15 thus defines the ray directions of image light from the display panel 14.

In the second display mode for displaying a 3D image, the stereoscopic virtual image display module 11 displays a parallax image on the first subpixels 21 included in the display panel 14. The parallax image includes images for the left eye El and the right eye Er, which have parallax between them. As shown in FIG. 5, first image light from third subpixels 33 selected from first subpixels 21 in the display panel 14 has the ray directions defined by the second optical device 15 and reaches the user's left eye El. The third subpixels 33 thus display an image for the left eye El in the state shown in FIG. 5. Second image light from fourth subpixels 34 selected from first subpixels 21 in the display panel 14 has the ray directions defined by the second optical device 15 and reaches the user's right eye Er. Thus, the fourth subpixels 34 display an image for the right eye Er. The user has the left eye receiving the first image light and the right eye receiving the second image light. The user has the two eyes receiving different images in a parallax image to recognize the images as a 3D image. Although the image light rays passing through the first optical device set 19 are linear in FIG. 5, the actual image light rays passing through the first optical device set 19 may be refracted or reflected by the optical elements in the first optical device set 19.

The user views the virtual image corresponding to the third subpixels 33 with the left eye and the virtual image corresponding to the fourth subpixels 34 with the right eye. The stereoscopic virtual image display module 11 according to one or more embodiments of the present disclosure allows the user to view the virtual image corresponding to the third subpixels 33 at a pixel density of 30 PPD and to view the virtual image corresponding to the fourth subpixels 34 at a pixel density of 30 PPD. The pixel density of the virtual image viewed with each eye may be referred to as a second pixel density. The user views the virtual image at 30 PPD with each eye. The user views the virtual image at 30 PPD with each eye to view one stereoscopic virtual image. The user recognizes this stereoscopic virtual image as having substantially the same pixel density as the virtual image viewed at 60 PPD with the two eyes. The stereoscopic virtual image display module 11 displays the virtual image at 30 PPD for each eye causing a decrease in resolution less noticeable when an image is changed into a stereoscopic virtual image.

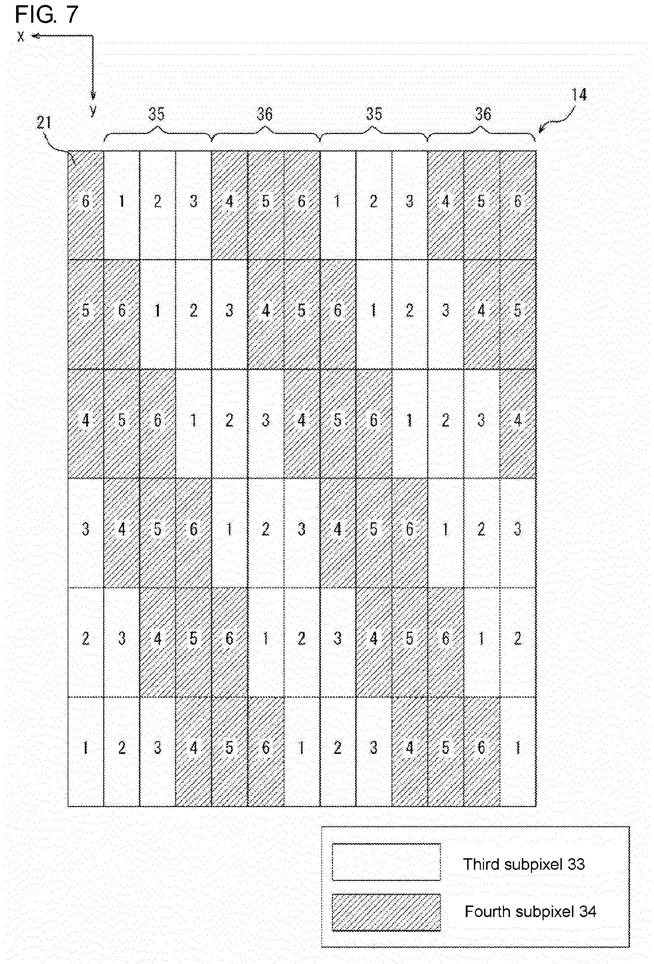

In one example, the third subpixels 33 displaying an image for the left eye El and the fourth subpixels 34 displaying an image for the right eye are arranged on the display panel 14 as shown in FIG. 7. In FIG. 7, the first subpixels 21 are numbered 1 to 6 for ease of explanation. The first subpixels 21 with the same number are collectively set to either the third subpixels 33 or the fourth subpixels 34. As described later, the first subpixels 21 are switchable between the third subpixels 33 and the fourth subpixels 34. The first subpixels 21 with the same number switch together at the same time. In the example shown in FIG. 7, first subpixels 21 numbered 1 to 3 are selected as the third subpixels 33, and first subpixels 21 numbered 4 to 6 are selected as the fourth subpixels 34. The third subpixels 33 and the fourth subpixels 34 are arranged obliquely to y-direction at an angle corresponding to the barrier inclination angle of the parallax barrier formed with the attenuation areas 31 and the transmissive areas 32 on the second optical device 15.

In FIG. 7, left eye viewable areas 35 on the display panel 14 viewable by the user's left eye El through the transmissive areas 32 on the second optical device 15 at least partially include the third subpixels 33. The areas on the display panel 14 viewable by the user's left eye El may include half the third subpixels 33 or more. In this case, areas on the display panel 14 unviewable by the user's right eye Er due to the light attenuation with the attenuation areas 31 on the second optical device 15 at least partially include the third subpixels 33. Right eye viewable areas 36 on the display panel 14 viewable by the user's right eye Er through the transmissive areas 32 on the second optical device 15 at least partially include the fourth subpixels 34. The areas on the display panel 14 viewable by the user's right eye Er may include half the fourth subpixels 34 or more. In this case, areas on the display panel 14 unviewable by the user's left eye El due to the light attenuation with the attenuation areas 31 on the second optical device 15 at least partially include the fourth subpixels 34. When the attenuation areas 31 and the transmissive areas 32 on the second optical device 15 include the same number of second subpixels 23 in x-direction, the left eye viewable areas 35 substantially align with the areas unviewable by the right eye Er, and the right eye viewable areas 36 substantially align with the areas unviewable by the left eye El.

When the user watches a parallax image, the user's left and right eyes El and Er may shift. As the user's eyes shift, the positions of the areas viewable by the left eye El and the positions of the areas viewable by the right eye Er may also shift accordingly on the display panel 14. For example, when the user shifts the eyes leftward (in the positive x-direction) relative to the display panel 14, the attenuation areas 31 and the transmissive areas 32 on the second optical device 15 as viewed from the user's eyes visually shift rightward (in the negative x-direction) relative to the display panel 14.

As the attenuation areas 31 and the transmissive areas 32 visually shift rightward relative to the display panel 14, the third subpixels 33 numbered 1 in FIG. 7 are unviewable by the user's left eye El but are viewable by the user's right eye Er, causing crosstalk. In the same manner, the fourth subpixels 34 numbered 4 in FIG. 7 are unviewable by the user's right eye Er but are viewable by the user's left eye El, causing crosstalk.

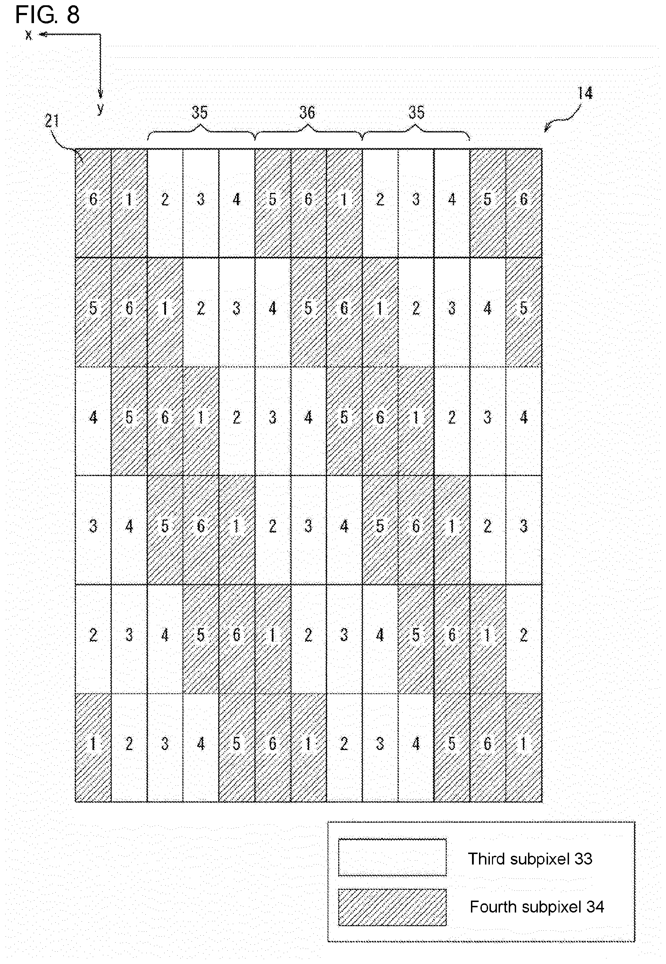

In this case, the controller 16 may obtain, through the input unit 17, the positions of the user's eyes detected by the detector 12, and shift, based on the positions of the user's eyes, the third subpixels 33 and the fourth subpixels 34 to minimize the crosstalk. In the example shown in FIG. 8, selected ones of the first subpixels 21 are switched to the third subpixels 33 or to the fourth subpixels 34 from the positions shown in FIG. 7. In the example shown in FIG. 8, the controller 16 switches the third subpixels 33 numbered 1 to the fourth subpixels 34 and the fourth subpixels 34 numbered 4 to the third subpixels 33. In other words, the controller 16 sets the first subpixels 21 numbered 2 to 4 as the third subpixels 33 for displaying the image for the left eye El. The controller 16 sets the first subpixels 21 numbered 5, 6, and 1 to the fourth subpixels 34 for displaying the image for the right eye Er. The left eye viewable areas 35 and the right eye viewable areas 36 are thus shifted in the negative x-direction as a whole. This structure allows the user shifting the eyes relative to the display panel 14 to view an intended parallax image on the display panel 14. In other words, the user can continuously view the image viewable as a 3D image.

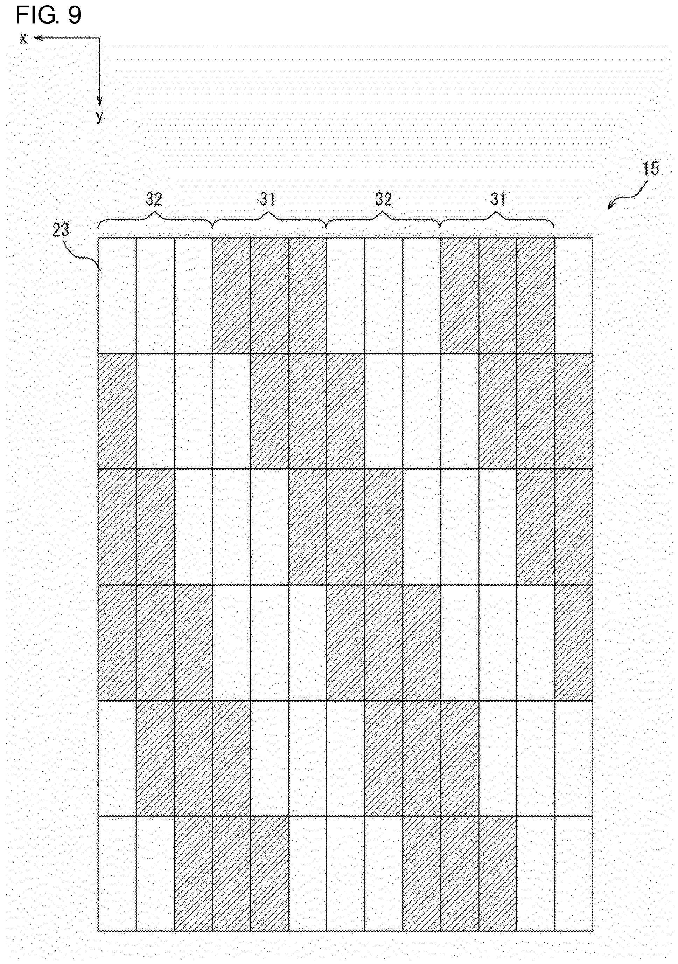

Unlike with the above method, to respond to the shift of the left and right eyes El and Er of the user watching a parallax image, the controller 16 may shift the attenuation areas 31 and the transmissive areas 32 displayed by the second optical device 15. For example, when the user shifts the left and right eyes El and Er leftward (in the positive x-direction) relative to the display panel 14, the attenuation areas 31 and the transmissive areas 32 may be shifted leftward, as shown in FIG. 9, from the positions shown in FIG. 6.

As described above, the stereoscopic virtual image display system 10 and the stereoscopic virtual image display module 11 according to the present disclosure have the first display mode for displaying a 2D image and the second display mode for displaying a parallax image on the display panel 14. In the first display mode, the controller 16 operates the second optical device 15 in the first drive mode to allow transmission of the image light. In the second display mode, the controller 16 operates the second optical device 15 in the second drive mode to define the traveling direction of the image light from a parallax image. The stereoscopic virtual image display system 10 and the stereoscopic virtual image display module 11 can thus display a 2D image and a 3D image in a switchable manner with a single device.

### Partially Displaying 2D Image and 3D Image

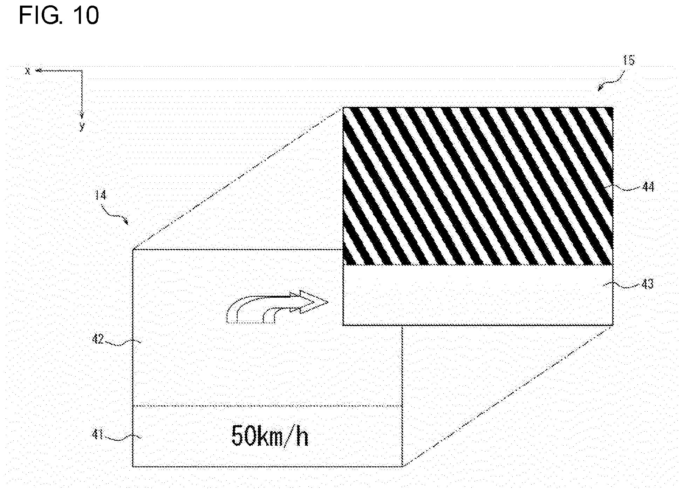

In one embodiment of the present disclosure, the stereoscopic virtual image display system 10 and the stereoscopic virtual image display module 11 display a 2D image and a 3D image together. A 2D image and a 3D image are each displayed on one area of the stereoscopic virtual image display module 11. FIG. 10 is a diagram describing an example of display on the display panel 14 and the second optical device 15.

In FIG. 10, the display panel 14 includes a third area 41 for displaying a 2D image and a fourth area 42 for displaying a parallax image. The fourth area 42 corresponds to the first active area. The third area 41 corresponds to a second active area. The second optical device 15 allows image light from the second active area to enter a third space. The third space is a space expected to include the user's two eyes. The second optical device 15 includes a fifth area 43 corresponding to the third area 41. The fifth area 43 includes selected ones of the second subpixels 23. The fifth area 43 is operated in the first drive mode. The second optical device 15 includes a sixth area 44 corresponding to the fourth area 42. The sixth area 44 includes selected ones of the second subpixels 23. The sixth area 44 is operated in the second drive mode. The second optical device 15 includes an area controlled in the first drive mode and another area controlled in the second drive mode. The fifth area 43 on the second optical device 15 may face the third area 41 on the display panel 14. The sixth area 44 on the second optical devices 15 may face the fourth area 42 on the display panel 14.

In the first drive mode, the fifth area 43 may have all the second subpixels 23 in a light tone to transmit a 2D image. In the fifth area 43, the second subpixels 23 may have the lightest tone. In the second drive mode, as described with reference to FIG. 6, the sixth area 44 includes the attenuation areas 31 in a relatively dark tone and the transmissive areas 32 in a relatively light tone. These areas extend in a predetermined direction. The sixth area 44 allows the image on the third subpixels 33 in the parallax image displayed on the fourth area 42 to reach the user's left eye El. The sixth area 44 allows the image on the fourth subpixels 34 in the parallax image displayed on the fourth area 42 to reach the user's right eye Er. The image light corresponding to the image on the third subpixels 33 corresponds to the first image light. The image light corresponding to the image on the fourth subpixels 34 corresponds to the second image light.

The controller 16 controls 2D image display on the third area 41 on the display panel 14 in the first display mode and parallax image display on the fourth area 42 on the display panel 14 in the second display mode. The controller 16 controls the operation of the fifth area 43 on the second optical device 15 in the first drive mode and the operation of the sixth area 44 on the second optical device 15 in the second drive mode.

For the display device in the example shown in FIG. 10 to be installed in a vehicle, the third area 41 shows the speed of the vehicle displayed as a 2D image, and the fourth area 42 shows arrows indicating the turning direction ahead in the traveling direction displayed as a parallax image recognizable as a 3D image. The user can perceive, from the 3D image, the approximate distance to the point ahead to turn right.

The user views the virtual image corresponding to the third subpixels 33 with the left eye and the virtual image corresponding to the fourth subpixels 34 with the right eye. The stereoscopic virtual image display module 11 according to one or more embodiments of the present disclosure allows the user to view the virtual image corresponding to the third subpixels 33 at a pixel density of 30 PPD and to view the virtual image corresponding to the fourth subpixels 34 at a pixel density of 30 PPD. The user views the virtual image at 30 PPD with each eye. The user views the virtual image at 30 PPD with each eye to view one stereoscopic virtual image. The user recognizes this stereoscopic virtual image as having substantially the same pixel density as the virtual image viewed at 60 PPD with the two eyes. The stereoscopic virtual image display module 11 displays the virtual image at 30 PPD for each eye causing a decrease in resolution less noticeable when an image is changed into a stereoscopic virtual image. The stereoscopic virtual image display module 11 displays the virtual image at 30 PPD for each eye causing less discomfort due to a resolution difference from the planar virtual image at 60 PPD.

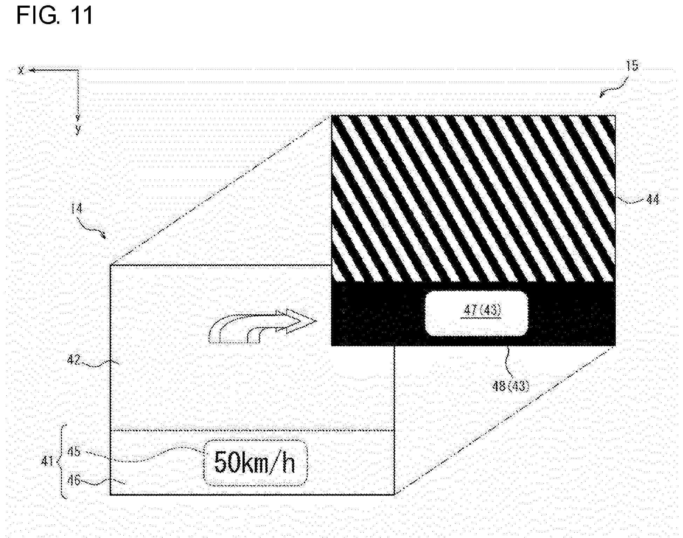

In one embodiment, in the first display mode, the controller 16 analyzes image data obtained from the display information obtainer 18, and detects an image display area 45 displaying an image and a non-image display area 46 displaying no image within the third area 41. FIG. 11 shows an example including the image display area 45 and the non-image display area 46. In FIG. 11, the image display area 45 displays speed information indicating 50 km/h. In FIG. 11, the non-image display area 46 includes no information to display. The image display area 45 and the non-image display area 46 may be determined by various methods. The controller 16 may determine whether to display an image for each first subpixel 21, and determine the image display area 45 and the non-image display area 46.

The fifth area 43 on the second optical device 15 includes a seventh area 47 corresponding to the image display area 45 and an eighth area 48 corresponding to the non-image display area 46. The controller 16 may set second subpixels 23 included in the eighth area 48 to have a dark tone, for example, the darkest tone. The controller 16 may set second subpixels 23 included in the seventh area 47 to have a light tone, for example, the lightest tone. This allows the non-image display area 46 in the image viewable by the user to be displayed darker, thus increasing the contrast in the displayed 2D image.

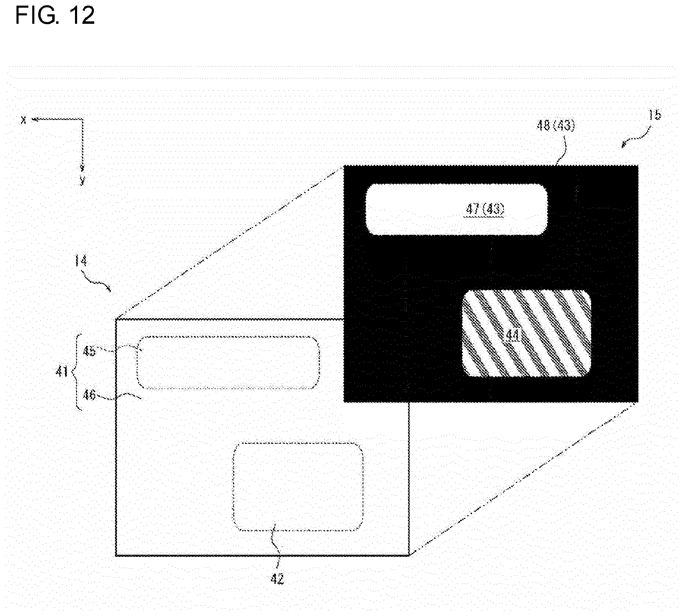

In FIGs. 10 and 11, the third area 41 and the fourth area 42 are arranged vertically on the display panel 14. The shapes and the arrangement of the third area 41 and the fourth area 42 are not limited to those shown in FIGs. 10 and 11. The third area 41 for displaying a 2D image and the fourth area 42 for displaying a parallax image may be arranged at any positions on the display panel 14. The display panel 14 may have the third area 41 and the fourth area 42 with the shapes and arrangement changeable dynamically. In the example shown in FIG. 12, the third area 41 and the fourth area 42 are arranged differently from those shown in FIGs. 10 and 11.

The controller 16 controls switching between the first display mode for displaying a 2D image on the third area 41 and the second display mode for displaying a 3D image on the fourth area 42 on the display panel 14. When switching the control over the third area 41 and the fourth area 42, the controller 16 accordingly switches the first drive mode for operating the fifth area 43 and the second drive mode for operating the sixth area 44 on the second optical device 15. The controller 16 may switch the first display mode and the second display mode partially on the display panel 14. When switching between the first display mode and the second display mode, the controller 16 may accordingly switch the first drive mode and the second drive mode partially on the second optical device 15.

In the example shown in FIG. 12, the controller 16 displays, for example, 2D character information on the image display area 45 in the third area 41 and displays a parallax image on the fourth area 42 on the display panel 14. The controller 16 sets the seventh area 47 in the fifth area 43 to have a light tone and sets the eighth area 48 to have a dark tone on the second optical device 15. The controller 16 causes the sixth area 44 on the second optical device 15 to display a parallax barrier including the attenuation areas 31 and the transmissive areas 32 extending in a predetermined direction, and allows the user to view the parallax image displayed on the fourth area 42 as a 3D image.

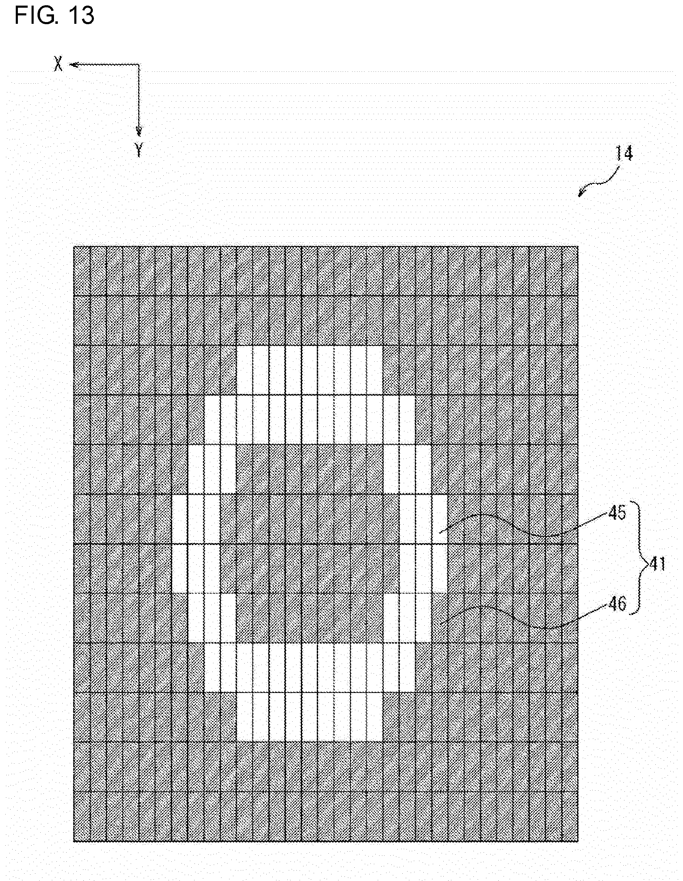

In the examples shown in FIGs. 11 and 12, the image display area 45 is rectangular and includes an image of, for example, a set of characters. However, the image display area 45 may be defined in a subpixel unit and may be an area including first subpixels 21 having a tone with a predetermined value or greater. In the example shown in FIG. 13, the display panel 14 shows a character o. In this case, the image display area 45 may be an area defined by the first subpixels 21 having tones other than the darkest tone or tones substantially equivalent to the darkest tone, and the non-image display area 46 may be the remaining area. In this example, the controller 16 recognizes the image display area 45 using image data. For example, the controller 16 may search a line buffer to display an image on the display panel 14 for first subpixels 21 having the darkest tone or tones substantially equivalent to the darkest tone, and determine such first subpixels 21 as the non-image display area 46 and the remaining subpixels as the image display area 45.

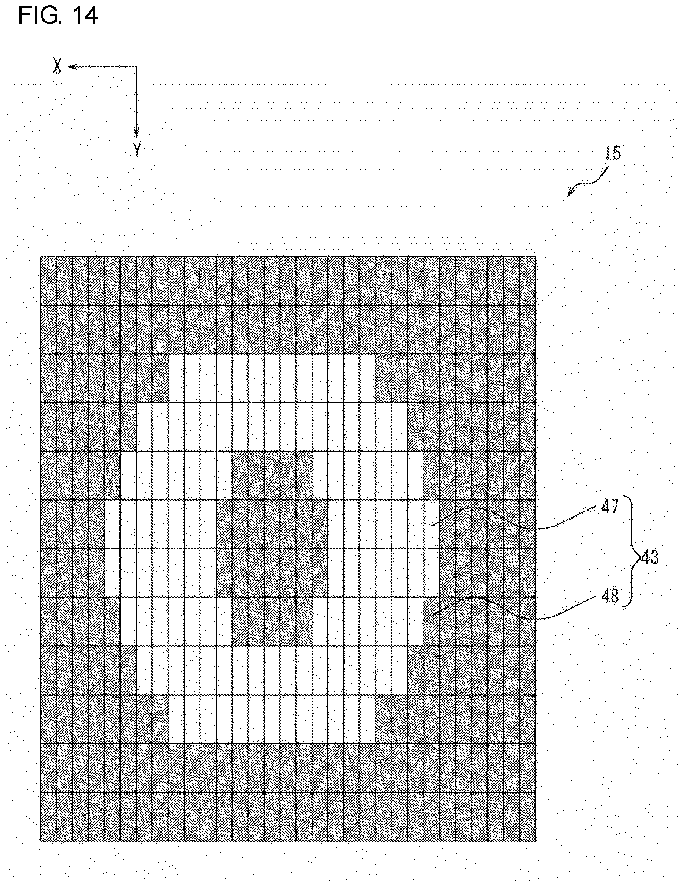

The controller 16 determines the seventh area 47 corresponding to the image display area 45 and the eighth area 48 corresponding to the non-image display area 46 on the second optical device 15 based on the positions of the left and right eyes El and Er. When the areas on the display panel 14 viewed by the left and right eyes El and Er through the second subpixels 23 on the second optical device 15 are both the non-image display area 46, the controller 16 may determine that such second subpixels 23 are included in the eighth area 48. When at least one of the left and right eyes El and Er views the image display area 45 through the second subpixels 23, the controller 16 may determine that such second subpixels 23 are included in the seventh area 47. In the example shown in FIG. 14, the seventh area 47 has a greater width than the image display area 45 in x-direction to allow the image display area 45 to be viewable by either of the left and right eyes El and Er.

As described above, the controller 16 sets the seventh area 47 and the eighth area 48. The stereoscopic virtual image display module 11 can thus display the area with no 2D image at a darker level, thus increasing the contrast in the displayed 2D image.

### Movable Object

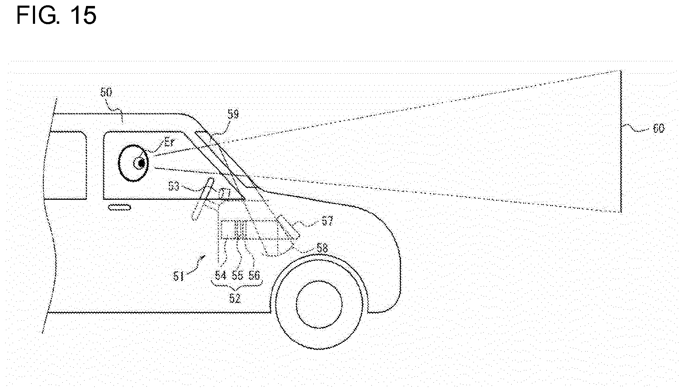

FIG. 15 is a schematic diagram of a head-up display 51 installed in a movable object 50, such as a vehicle, as one implementation of the display device according to the present disclosure. The head-up display 51 may also be referred to as a HUD The head-up display 51 includes a display device 52 and a detector 53. The head-up display 51 may function as a stereoscopic virtual image display system. The detector 53 detects the positions of the left and right eyes El and Er of the user who is the driver of the movable object 50, and transmits the information to the display device 52. The display device 52 includes an illuminator 54, a display panel 55, a second optical device 56, and a controller that controls these components. The illuminator 54, the display panel 55, the second optical device 56, and the controller have the structures similar to the structures of the illuminator 13, the display panel 14, the second optical device 15, and the controller 16 in the stereoscopic virtual image display module 11 shown in FIG. 1, and will not be described.

The stereoscopic virtual image display module may include the display device 52 and the first optical device set. The first optical device set projects the image displayed on the display panel 55 into the field of view of the user as a virtual image. The first optical device set includes a first optical member 57 and a second optical member 58. The first optical device set has the pixel density that may change depending on the optical properties of the first optical member 57 and the second optical member 58. The optical properties may be the magnification. The first optical device set may include a projection receiving member 59. The first optical device set has the pixel density that may change depending on the optical properties of the first optical member 57, the second optical member 58, and the projection receiving member 59. The first optical device set has the pixel density that may change depending mainly on the optical properties of the first optical member 57 and the second optical member 58. The stereoscopic virtual image display module, in combination with the projection receiving member 59 that reflects image light toward the user, may be controllable to allow the user to view the virtual image corresponding to the active area with the eyes. The first optical member 57 is a mirror that reflects image light emitted from the display panel 55 and transmitted through the second optical device 56. The second optical member 58 is a mirror that reflects the image light reflected by the first optical member 57 toward the projection receiving member 59. One or both of the first optical member 57 and the second optical member 58 may be concave mirrors having a positive refractive power.

The projection receiving member 59 is a semitransparent member that reflects the incident image light toward the user's left and right eyes El and Er and transmits the light incident from the front of the user. The projection receiving member 59 may be a part of a front windshield. The projection receiving member 59 may be referred to as a windshield. The projection receiving member 59 reflects image light toward the user. The projection receiving member 59 may be a dedicated combiner. The first optical member 57, the second optical member 58, and the projection receiving member 59 project the image displayed on the display area (active area) on the display panel 55 to form a virtual image 60 within the field of view of the user. The surface on which the virtual image 60 is displayed may be referred to as a virtual display surface viewed by the user. The structure of the first optical device set is not limited to the combination of mirrors. The first optical device set may have various structures such as a combination of a mirror and a lens.

With the structure described above, the head-up display 51 projects a 2D image and a 3D image into the user's field of view as the virtual image 60 in accordance with the positions of the user's left and right eyes El and Er. The 2D image is perceived by the user as appearing at the position where the virtual image 60 appears. The 3D image is perceived to have a depth farther from the position where the virtual image 60 is displayed with the parallax between the left and right eyes El and Er caused by the parallax image.

The structure according to the present disclosure is not limited to the structure described in the above embodiments, but may be modified or altered variously. For example, the functions of the components and the steps are reconfigurable unless any contradiction arises. A plurality of components may be combined into a single unit or a single component may be divided into separate units.

For example, the stereoscopic virtual image display module 11 has the display panel 14 between the illuminator 13 and the second optical device 15. However, the stereoscopic virtual image display module 11 may have the second optical device 15 between the display panel 14 and the illuminator 13. In this case, the illuminator 13 illuminates the second optical device 15, and the output from the second optical device 15 enters the display panel 14. The stereoscopic virtual image display module 11 having the positions of the display panel 14 and the second optical device 15 replaced as above provides the same functions and advantageous effects. In the same manner, the display device 52 may have the second optical device 56 between the illuminator 54 and the display panel 55.

In the above embodiments, the stereoscopic virtual image display module 11 displays a 2D image on one area and a 3D image on another area. The image displayed by the stereoscopic virtual image display module 11 may be entirely switched between a 2D image and a 3D image.

The movable object according to one or more embodiments of the present disclosure includes a vehicle, a vessel, and an aircraft. The vehicle according to one or more embodiments of the present disclosure includes, but is not limited to, an automobile and an industrial vehicle, and may also include a railroad vehicle, a community vehicle, and a fixed-wing aircraft traveling on a runway. The automobile includes, but is not limited to, a passenger vehicle, a truck, a bus, a motorcycle, and a trolley bus, and may also include other vehicles traveling on a road. The industrial vehicle includes an agricultural vehicle and a construction vehicle. The industrial vehicle includes, but is not limited to, a forklift and a golf cart. The agricultural vehicle includes, but is not limited to, a tractor, a cultivator, a transplanter, a binder, a combine, and a lawn mower. The construction vehicle includes, but is not limited to, a bulldozer, a scraper, a power shovel, a crane vehicle, a dump truck, and a road roller. The vehicle includes man-powered vehicles. The classification of the vehicle is not limited to the above examples. For example, the automobile may include an industrial vehicle traveling on a road, and one type of vehicle may fall within a plurality of classes. The vessel according to one or more embodiments of the present disclosure includes a jet ski, a boat, and a tanker. The aircraft according to one or more embodiments of the present disclosure includes a fixed-wing aircraft and a rotary-wing aircraft.

In the present disclosure, the first, the second, or others are identifiers for distinguishing the components. The identifiers of the components distinguished with the first, the second, and others in the present disclosure are interchangeable. For example, the first direction can be interchangeable with the second direction. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the orders of the components or to determine the existence of smaller or larger number identifiers.

The stereoscopic virtual image display module, the stereoscopic virtual image display system, and the movable object including the stereoscopic virtual image display module according to one or more embodiments of the present disclosure can display a stereoscopic image with a satisfactory resolution.

The present invention may be embodied in various forms without departing from the spirit or the main features of the present invention. The embodiments described above are thus merely illustrative in all respects. The scope of the present invention is defined not by the description given above but by the claims. Any modifications and alterations contained in the claims fall within the scope of the present invention.

### Reference Signs List

- 10: stereoscopic virtual image display system
- 11: stereoscopic virtual image display module
- 12: detector
- 14: display panel
- 19: first optical device set
- 15: second optical device
- 13: illuminator
- 14a: liquid crystal layer
- 14b, 14c: glass substrate
- 14d: color filter
- 15a: liquid crystal layer
- 15b, 15c: glass substrate
- 16: controller
- 17: input unit
- 18: display information obtainer
- 21: first subpixel
- 22: pixel
- 23: second subpixel
- 31: attenuation area (first area)
- 32: transmissive area (second area)
- 33: third subpixel
- 34: fourth subpixel
- 35: left eye viewable area
- 36: right eye viewable area
- 41: third area
- 42: fourth area
- 43: fifth area
- 44: sixth area
- 45: image display area
- 46: non-image display area
- 47: seventh area
- 48: eighth area
- 50: movable object
- 51: head-up display
- 52: display device
- 53: detector
- 54: illuminator
- 55: display panel
- 56: second optical device
- 57: first optical member
- 58: second optical member
- 59: projection receiving member
- 60: virtual image
- El: left eye
- Er: right eye

## Claims

1. A stereoscopic virtual image display module, comprising:
a display panel including an active area configured to output image light;
a first optical device set configured to reflect the image light toward a first eye and a second eye of a user to allow the user to view a virtual image corresponding to the active area; and
a second optical device configured to change or restrict a ray direction of the image light traveling from a first active area included in the active area through the first optical device set toward the user to allow first image light to enter the first eye and to allow second image light to enter the second eye,
wherein the stereoscopic virtual image display module allows each of the first eye and the second eye to view a virtual image corresponding to the first active area at a first pixel density higher than or equal to 60 pixels per degree.

2. The stereoscopic virtual image display module according to claim 1, wherein
the second optical device allows the image light from a second active area to enter the first eye and the second eye, and
the second active area is included in the active area and different from the first active area.

3. The stereoscopic virtual image display module according to claim 2, wherein
the stereoscopic virtual image display module allows the user to view a virtual image corresponding to the second active area at a second pixel density, and
the second pixel density is at least twice the first pixel density.

4. The stereoscopic virtual image display module according to claim 3, wherein
the second pixel density is higher than or equal to 160 pixels per degree.

5. The stereoscopic virtual image display module according to any one of claims 1 to 4, wherein
the first optical device set includes
a first reflective set including at least one mirror configured to reflect the image light, and
a second reflective set including at least one transparent device configured to reflect the image light reflected by the first reflective set.

6. The stereoscopic virtual image display module according to claim 5, wherein
the at least one transparent device reflects the image light to allow the image light to be received by the user and transmits other light to allow the other light to be receive by the user.

7. A stereoscopic virtual image display module, comprising:
a display panel including an active area configured to output image light;
a first optical device set configured to reflect the image light in a first direction; and
a second optical device configured to change or restrict a ray direction of the image light traveling from a first active area included in the active area to allow first image light to enter a first space and to allow second image light to enter a second space,
wherein the stereoscopic virtual image display module, in combination with a windshield configured to reflect the image light toward a user, is controllable to allow each eye of the user to view a virtual image corresponding to the first active area at a pixel density higher than or equal to 60 pixels per degree.

8. The stereoscopic virtual image display module according to claim 7, wherein
the second optical device allows the image light from a second active area to enter a third space, and
the second active area is included in the active area and different from the first active area.

9. The stereoscopic virtual image display module according to claim 8, wherein
the stereoscopic virtual image display module, in combination with the windshield, allows the user to view a virtual image corresponding to the active area at a second pixel density, and
the second pixel density is at least twice the first pixel density.

10. The stereoscopic virtual image display module according to claim 9, wherein
the second pixel density is higher than or equal to 160 pixels per degree.

11. A stereoscopic virtual image display module, comprising:
a display panel including an active area configured to output image light;
a first optical device set configured to reflect the image light toward a first eye and a second eye of a user to allow the user to view a virtual image from the active area; and
a second optical device controllable to attenuate or restrict the image light traveling from a first active area included in the active area through the first optical device set toward the user to allow first image light to enter the first eye and to allow second image light to enter the second eye,
wherein the stereoscopic virtual image display module is controllable to allow each of the first eye and the second eye to view a virtual image corresponding to the first active area at a first pixel density higher than or equal to 60 pixels per degree.

12. The stereoscopic virtual image display module according to claim 10, wherein
the second optical device is controllable to
allow the second image light entering the first eye to have a larger amount of attenuation than the first image light entering the first eye, and
allow the first image light entering the second eye to have a larger amount of attenuation than the second image light entering the second eye.

13. The stereoscopic virtual image display module according to claim 11 or claim 12, wherein
the second optical device is controllable to allow the image light from a second active area to enter the first eye and the second eye, and
the second active area is included in the active area and different from the first active area.

14. The stereoscopic virtual image display module according to claim 13, wherein
the stereoscopic virtual image display module is controllable to allow the user to view a virtual image corresponding to the second active area at a second pixel density, and
the second pixel density is at least twice the first pixel density.

15. The stereoscopic virtual image display module according to claim 14, wherein
the second pixel density is higher than or equal to 160 pixels per degree.

16. A stereoscopic virtual image display module, comprising:
a display panel including an active area configured to output image light;
a first optical device set configured to reflect the image light in a first direction; and
a second optical device controllable to change or restrict a ray direction of the image light traveling from a first active area included in the active area to allow first image light to enter a first space and to allow second image light to enter a second space,
wherein the stereoscopic virtual image display module, in combination with a windshield configured to reflect the image light toward a user, is controllable to allow each eye of the user to view a virtual image corresponding to the first active area at a first pixel density higher than or equal to 60 pixels per degree.

17. The stereoscopic virtual image display module according to claim 16, wherein
the second optical device is controllable to
allow the second image light entering the first space to have a larger amount of attenuation than the first image light entering the first space, and
allow the first image light entering the second space to have a larger amount of attenuation than the second image light entering the second space.

18. The stereoscopic virtual image display module according to claim 17 or claim 14, wherein
the second optical device is controllable to allow the image light from a second active area to enter a third space, and
the second active area is included in the active area and different from the first active area.

19. The stereoscopic virtual image display module according to claim 18, wherein
the stereoscopic virtual image display module, in combination with the windshield, is controllable to allow the user to view a virtual image corresponding to the second active area at a second pixel density, and
the second pixel density is at least twice the first pixel density.

20. The stereoscopic virtual image display module according to claim 19, wherein
the second pixel density is higher than or equal to 160 pixels per degree.

21. The stereoscopic virtual image display module according to any one of claims 1 to 20, further comprising:
a detector controllable to capture an image of the first eye and the second eye of the user.

22. A stereoscopic virtual image display system, comprising:
the stereoscopic virtual image display module according to any one of claims 6 to 10 and 16 to 20; and
a windshield.

23. A movable object, comprising:
the stereoscopic virtual image display module according to any one of claims 1 to 21; and
a windshield.
